## Europäisches Patentamt
## European Patent Office
## Office européen des brevets

(11) Veröffentlichungsnummer : **0 359 072 B1**

# (12) EUROPÄISCHE PATENTSCHRIFT

(45) Veröffentlichungstag der Patentschrift :
**30.11.94 Patentblatt 94/48**

(21) Anmeldenummer : **89116242.2**

(22) Anmeldetag : **02.09.89**

(30) Priorität : **05.09.88 DE 3830120**

(43) Veröffentlichungstag der Anmeldung :
**21.03.90 Patentblatt 90/12**

(45) Bekanntmachung des Hinweises auf die
Patenterteilung :
**30.11.94 Patentblatt 94/48**

(84) Benannte Vertragsstaaten :
**CH DE ES FR GB IT LI SE**

(56) Entgegenhaltungen :
**EP-A- 0 119 140**
**DE-A- 3 401 729**
**US-A- 4 092 595**

(51) Int. Cl.⁵ : **H04L 25/00, H04L 25/49,**
**H04B 17/00**

(54) Digitales Nachrichtenübertragungssystem mit Übertragung einer Zusatz-Information.

(73) Patentinhaber : **Alcatel SEL**
**Aktiengesellschaft**
**Lorenzstrasse 10**
**D-70435 Stuttgart (DE)**

(72) Erfinder : **Neth, Alois**
**Lange Strasse 145**
**D-7140 Ludwigsburg (DE)**

(74) Vertreter : **Pohl, Herbert, Dipl.-Ing et al**
**Alcatel SEL AG**
**Patent- und Lizenzwesen**
**Postfach 30 09 29**
**D-70449 Stuttgart (DE)**

## Beschreibung

Die Erfindung betrifft ein digitales Nachrichtenübertragungssystem nach dem Oberbegriff des Patentanspruchs 1.

Ein derartiges Nachrichtenübertragungssystem ist aus der DE-C2-34 01 729 bekannt. Dort wird eine Haupt-Information in zwei Codes übertragen, und eine Zusatz-Information wird durch Umschalten zwischen den beiden Codes übermittelt, indem k mal ein Code 1 eine logische 1 und l mal ein Code 2 eine logische 0 oder umgekehrt bedeuten.

Der Erfindung liegt die Aufgabe zugrunde, eine andere Möglichkeit zur Übertragung einer Zusatz-Information Z anzugeben.

Die Aufgabe wird gelöst wie in Patentanspruch 1 angegeben. Weiterbildungen ergeben sich aus den Unteransprüchen.

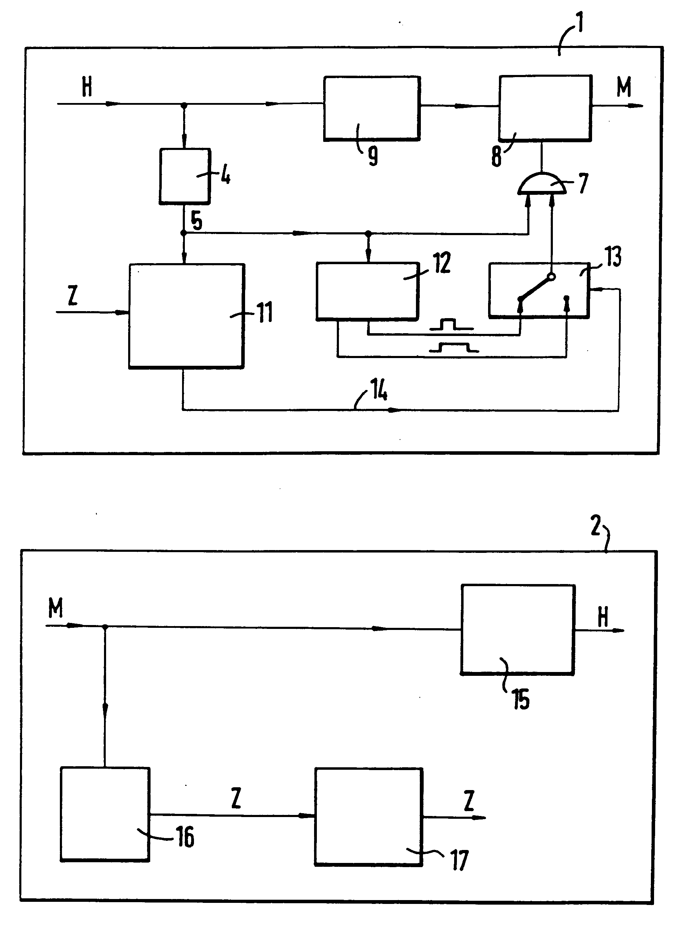

Die Erfindung wird anhand der einzigen Figur beispielsweise erläutert.

Sie zeigt den schematischen Aufbau des erfindungsgemäßen Nachrichtenübertragungssystems.

Es besteht aus einem Sendeteil 1, einem Empfangsteil 2 und einer (nicht dargestellten) Übertragungsstrecke. Es wird eine Haupt-Information H mit einer hohen Bitfolgefrequenz übertragen und im Sendeteil 1 sowohl einem umschaltbaren Codierer 8, dem ein Schieberegister 9 vorgeschaltet ist, als auch einem Nullendetektor 4 zugeführt, der die Haupt-Information H auf das Auftreten von Nullfolgen einer bestimmten Mindestlänge (z.B. 8 Nullen) hin untersucht.

Wenn der Nullendetektor 4 eine Nullfolge von z.B. 8 Nullen detektiert hat, gibt er ein Freigabesignal über eine Leitung 5 und ein UND-Gatter 7, dessen Ausgangssignal einen umschaltbaren Codierer 8 steuert, der zwischen zwei Codes, z.B. dem HDB3-Code und dem AMI-Code, umschalten kann.

Das Schieberegister 9 verzögert jedes Bit der Haupt-Information H um die vorgegebene Mindestlänge von Nullfolgen (hier 8 Nullen), weil der Nullendetektor 4 das Freigabesignal auf der Leitung 5 erst nach dem Ende der Nullfolge abgeben kann und erst dann im umschaltbaren Codierer 8 der mögliche Wechsel vom HDB3-Code auf den AMI-Code beginnen darf.

Eine Zusatz-Information Z mit einer niedrigen Bitfolgefrequenz wird zunächst in einen Pufferspeicher 11 eingeschrieben, dem sie bei Auftreten einer Nullfolge Bit für Bit entnommen werden kann. Dabei dient das Freigabesignal des Nullendetektors 4 auf der Leitung 5 dem Pufferspeicher 11 als Takt und bewirkt, daß aus ihm ein Bit der Zusatz-Information Z über eine Steuerleitung 14 ausgelesen wird. Gleichzeitig triggert das Freigabesignal einen 0/1-Generator 12, der z.B. für logische Nullen der Zusatz-Information Z 5 Bit lange Impulse und 8 Bit lange Impulse für logische Einsen (entsprechend der hier für das Einfügen der Zusatz-Information Z vorgesehenen Mindestlänge der Nullfolge von 8 Bits) liefert.

Ein Bit-Umschalter 13 schaltet nun, gesteuert durch das vom Pufferspeicher 11 ausgelesene Bit der Zusatz-Information Z, über das UND-Gatter 7 für die Dauer von 5 oder 8 Bits den Codierer 8 vom HDB3-Code auf den AMI-Code um.

Über die Steuerleitung 14 wird dem Bit-Umschalter 13 mitgeteilt, ob er den 5 Bit langen. Impuls oder den 8 Bit langen Impuls zum UND-Gatter 7 durchschalten soll. Wenn das aus dem Pufferspeicher ausgelesene Bit den logischen Wert 0 hat, wird der 5 Bit lange Impuls durchgeschaltet, wenn dieses Bit den logischen Wert 1 hat, wird der 8 Bit lange Impuls durchgeschaltet.

Damit entsteht ein Signal M, das die Haupt-Information H im HDB3-Code, jedoch während der Dauer der 8 oder 5 Bit langen Impulse im AMI-Code codiert enthält.

Im Empfangsteil 2 wird das Signal M einem HDB3/AMI-Decodierer 15 zugeführt, der daraus wieder das ursprüngliche Signal der Haupt-Information H am Ausgang des HDB3/AMI-Decodierers 15 herstellt.

Zur Wiedergewinnung der Zusatz-Information Z wird das Signal M, bevor es in den Decodierer 15 gelangt, mit einem 0/1-Detektor 16 untersucht, welcher aus der jeweiligen Zeitdauer des AMI-Codes die Binärwerte der Zusatz-Information Z ermittelt, d.h. im vorliegenden Beispiel den Binärwert 0, wenn 5 aufeinanderfolgend empfangene Bits im AMI-Code codiert vorliegen, und den Binärwert 1, wenn 8 aufeinanderfolgend empfangene Bits im AMI-Code codiert vorliegen.

Damit steht am Ausgang des Pufferspeichers 17 wieder die sendeseitige Zusatz-Information Z zur Verfügung. Die Zusatz-Information Z kann für Dienstkanäle, für Fernwirksignale oder Zustandsmeldungen genutzt werden.

In dem hier dargestellten Ausführungsbeispiel werden der HDB3-Code und der AMI-Code verwendet, die sich nur beim Auftreten von mindestens 4 binären Nullen hintereinander unterscheiden. Daher eignen sich in diesem Fall auch nur Nullfolgen zum Codewechsel zwischen HDB3-Code und AMI-Code.

Denkbar ist auch ein Wechsel zwischen anderen Codes, die gegebenenfalls das empfangsseitige Erkennen auch anderer, häufig auftretender Bitfolgen (etwa 010101...) gestatten.

Im Ausführungsbeispiel wurde während einer ersten oder einer zweiten Zeitdauer innerhalb der durch die Länge der bestimmten Bitfolge vorgegebenen Zeitdauer auf den AMI-Code umgeschaltet; dabei waren beide Zeitdauern durch jeweils eine einzige Zahl von Bitperioden, nämlich 5 für eine logische Null und 8 für eine logische Eins der Zusatz-Information Z, festgelegt.

Es ist auch möglich, die Übertragung einer logischen Null mit z.B. 3, 4 oder 5 Bitperioden, die einer logischen Eins mit z.B. 6, 7 oder 8 Bitperioden zuzulassen, solange die vorgegebene Zeitdauer mindestens 8 Bitperioden lang ist. Allgemein kann gesagt werden, daß sich die Zahl der Bitperioden für den einen logischen Wert zwischen $n_1$ und $n_2$, die für den anderen zwischen $n_3$ und $n_4$ bewegt, wobei gilt:

$$n_1 < n_2 < n_3 < n_4$$

und wobei $n_1$, $n_2$, $n_3$, $n_4$ natürliche Zahlen sind.

## Patentansprüche

1. Digitales Nachrichtenübertragungssystem mit einem Sendeteil (1) und einem Empfangsteil (2), bei dem im Sendeteil (1) ein umschaltbarer Codierer (8) und im Empfangsteil (2) ein Decodierer (15) vorhanden sind, wobei eine Haupt-Information (H) mit einer hohen Bitfolgefrequenz in einem ersten und einem zweiten Code und eine Zusatz-Information (Z) mit einer niedrigen Bitfolgefrequenz durch Umschalten zwischen den beiden Codes übertragen werden, **dadurch gekennzeichnet,** daß die Zusatz-Information (Z) nur bei Auftreten einer bestimmten Bitfolge in der Haupt-Information (H) übertragen wird, indem der umschaltbare Codierer (8) im Sendeteil (1) je nach dem binären Wert der Zusatz-Information (Z) während einer ersten oder einer zweiten Zeitdauer innerhalb der durch die Länge der Bitfolge vorgegebenen Zeitdauer auf den zweiten Code umgeschaltet wird, daß der im Empfangsteil (2) vorhandene Decodierer (15) für beide Codes geeignet ist und die Haupt-Information (H) aus ihnen decodiert, und daß ein Detektor (16) vorhanden ist, der aus der jeweiligen Zeitdauer des zweiten Codes die Binärwerte der Zusatz-Information (Z) ermittelt.

2. Digitales Nachrichtenübertragungssystem nach Anspruch 1, dadurch gekennzeichnet, daß der erste Code der HDB3-Code, der zweite Code der AMI-Code und die vorgegebene Bitfolge eine Folge von binären Nullen ist.

3. Digitales Nachrichtenübertragungssystem nach den Ansprüchen 1 und 2, dadurch gekennzeichnet, daß die erste Zeitdauer zwischen $n_1$ und $n_2$ Bitperioden, daß die zweite Zeitdauer zwischen $n_3$ und $n_4$ Bitperioden der Haupt-Information lang ist, und daß beide Zeitdauern innerhalb einer mindestens $n_4$ langen bestimmten Bitfolge in der Haupt-Information (H) liegen, wobei gilt:

$$n_1 < n_2 < n_3 < n_4$$

und $n_1$, $n_2$, $n_3$, $n_4$ natürliche Zahlen sind.

## Claims

1. A digital communication system with a transmitter unit (1) containing a switchable encoder (8) and a receiver unit (2) containing a decoder (15), whereby main information (H) is transmitted at a high bit rate in a first and a second code, and additional information (Z) is transmitted at a low bit rate by switching between the two codes, characterised in that the additional information (Z) is transmitted only on the occurrence of a specific bit sequence in the main information (H) by switching the switchable encoder (8) in the transmitter unit (1) to the second code for a first or second time period within the period determined by the length of the bit sequence, depending on the binary value of the additional information (Z), that the decoder (15) in the receiver unit (2) is suitable for both codes, and decodes the main information (H) therefrom, and that a detector (16) is provided that determines the binary values of the additional information (Z) from the respective duration of the second code.

2. A digital communication system according to Claim 1, characterised in that the first code is the HDB3 code, the second code the AMI code and the predetermined bit sequence is a sequence of binary zeros.

3. A digital communication system according to Claims 1 and 2, characterised in that the length of the first time period is between n1 and $n_2$ bit periods of the main information, that the length of the second time period is between $n_3$ and $n_4$ bit periods of the main information, and that both time periods lie within a specific bit sequence of length at least $n_4$ in the main information (H), where:

$$n_1 < n_2 < n_3 < n_4$$

and $n_1$, $n_2$, $n_3$, $n_4$ are natural numbers.

## Revendications

1. Système numérique de transmission de l'information comportant une partie émettrice (1) et une partie réceptrice (2) dans le cas duquel dans la partie émettrice (1) se trouve un codeur commutable (8) et, dans la partie réceptrice (2) un décodeur (15), système dans le cas duquel une information principale (H) est transmise, avec une fréquence élevée de séquences de bits, dans un premier et dans un second codes et une information additionnelle (Z) est transmise, avec une basse fréquence de séquences de bits, par commutation entre les deux codes,

système caractérisé par le fait que l'information additionnelle (Z) n'est transmise que lors de la survenance d'une séquence de bits déterminée dans l'information principale (H), en ce sens que le codeur commutable (8) de la partie émettrice (1) commute sur le second code, selon chaque fois la valeur binaire de l'information additionnelle (Z), pendant une première ou une seconde durées contenues à l'intérieur de la durée prescrite par la longueur de la séquence de bits, par le fait que décodeur (15) se trouvant dans la partie réceptrice (2) convient pour les deux codes et que, de ces codes, il décode l'information principale (H) et par le fait qu'il existe un détecteur (16) qui établit les valeurs binaires de l'information additionnelle (Z) à partir de la durée respective du second code.

2. Système numérique de transmission de l'information selon la revendication 1,

    caractérisé

    par le fait que le premier code est le code HDB3, le second code est le code AMI et que la séquence de bits prescrite est une séquence de zéros binaires.

3. Système numérique de transmission de l'information selon les revendications 1 et 2,

    caractérisé

    par le fait que la première durée a une longueur comprise entre $n_1$ et $n_2$ périodes de bits, que la seconde durée a une longueur comprise entre $n_3$ et $n_4$ périodes de bits de l'information principale, et par le fait que les deux durées se situent à l'intérieur d'une séquence de bits déterminée, de longueur au moins $n_4$, dans l'information principale (H), avec:

$$n_1 < n_2 < n_3 < n_4$$

et $n_1$, $n_2$, $n_3$, $n_4$ étant des nombres naturels.